# EUROPÄISCHE PATENTANMELDUNG

(11) **EP 1 346 863 A2**
(43) Veröffentlichungstag der Anmeldung: **24.09.2003**
(21) Anmeldenummer: 03004556.1
(22) Anmeldetag: 28.02.2003
(51) Int. Cl.: B60J 7/043

(54) **Fahrzeug mit einem zu öffnenden Fahrzeugdach**

(30) Priorität: 19.03.2002 DE 10212241
(71) Anmelder: Webasto Vehicle Systems International GmbH, 82131 Stockdorf (DE)
(72) Erfinder: De Gaillard, Francois, 85390 Mouilleron en Pareds (FR)
(74) Vertreter: Bedenbecker, Markus

(57) **Zusammenfassung**

Fahrzeug, insbesondere Limousine oder Coupé, mit einem Fahrzeugdach (2) mit karosseriefesten Dachseitenholmen (3), mit einem sich an eine Frontscheibe (7) anschließenden bewegbaren Deckel (9) zum Schließen und zum Freilegen einer im Fahrzeugdach (2) gebildeten Dachöffnung und mit einer an die Dachöffnung angrenzenden Heckscheibe (8), wobei der Deckel (9) mittels einer vorderen Lagereinrichtung und einer hinteren Lagereinrichtung an vorderen bzw. hinteren dachfesten Längsführungen (10 bzw. 11) verschiebbar geführt ist und zum Freilegen der Dachöffnung zumindest an seiner Hinterkante angehoben und über die Heckscheibe (8) verschoben wird, und wobei die vorderen und die hinteren dachfesten Längsführungen (10 bzw. 11) im Bereich der beiden Dachseitenholme (3) bezüglich der Dachoberfläche versenkt angeordnet sind und die hinteren Längsführungen (11) entlang der Seitenränder der Heckscheibe (9) verlaufen.

## Beschreibung

Die Erfindung betrifft ein Fahrzeug, insbesondere eine Limousine oder ein Coupé, mit einem Fahrzeugdach mit karosseriefesten Dachseitenholmen, mit einem sich an eine Frontscheibe anschließenden bewegbaren Deckel zum Schließen und zum Freilegen einer im Fahrzeugdach gebildeten Dachöffnung und mit einer an die Dachöffnung angrenzenden Heckscheibe.

Aus der DE 197 13 347 C1 ist ein Fahrzeug mit einem Fahrzeugdach bekannt geworden, das eine Dachöffnung aufweist, die sich zwischen den beiden sich gegenüberliegenden Dachseitenholmen erstreckt. Ein bewegbarer Deckel, mit dem die Dachöffnung wahlweise verschlossen oder freigelegt werden kann, ist im Bereich seines Vorderrandes beidseits an Führungsschienen, die an den Innenseiten der Dachseitenholme angeordnet sind, mittels eines jeweiligen Schlittens verschiebbar gelagert. Der Deckel ist mittels seitlich im Bereich der Deckelhinterkante angelenkter Stützhebel abgestützt, welche in unterhalb des Niveaus der festen Dachhaut angeordneten Führungen nach hinten entlang eines hinteren festen Dachteils verfahrbar sind und beim Austreten nach oben ein flexibles Dichtelement teilweise verdrängen, welches zwischen den Dachseitenholmen und dem hinteren festen Dachteil angeordnet ist. Beim Öffnen des Deckels bilden die sich mit dem Deckel bewegenden Stützhebel eine stabile Abstützung des Hinterabschnitts des Deckels. Da der Deckel lediglich über das feste Dachteil verfahrbar ist, kann bei einem vergleichsweise kurzen Fahrzeugdach die Dachöffnung ebenfalls nur eine vergleichsweise geringe Länge aufweisen.

Aufgabe der Erfindung ist es, ein eingangs genanntes Fahrzeug mit einer verbesserten Dachkonstruktion zu schaffen.

Die Aufgabe wird durch ein Fahrzeug mit den Merkmalen des Anspruchs 1 gelöst. Vorteilhafte Ausgestaltungen der Erfindung sind in den Unteransprüchen angegeben.

Da bei dem mittels eines bewegbaren Deckels zu öffnenden erfindungsgemäßen Fahrzeugdach die hinteren Längsführungen entlang der Seitenränder der Heckscheibe verlaufen, kann der zusätzlich im Bereich seines Hinterrandes sicher abgestützte Deckel über die Heckscheibe nach hinten verfahren werden, so daß eine große Dachöffnung freilegbar ist. Dadurch kann das Fahrzeugdach mit nur einer großen Dachöffnung und einer Heckscheibe einfach und mit wenig Trennstellen aufgebaut sein. Entsprechend dem kontinuierlichen Verlauf der Dachseitenholme von den A-Säulen nach hinten in die C-Säulen bzw. die Karosserie am Kofferraum geht der geschlossene Deckel stufenlos in die Heckscheibe über.

Die hinteren Längsführungen können entlang der gesamten Länge der Heckscheibe verlaufen oder vor dem Hinterende der Heckscheibe enden, wobei in diesem Fall die Heckscheibe zweckmäßigerweise seitlich an die hinteren Längsführungen und an die hinter den Längsführungen liegenden Abschnitte der Dachseitenholme angrenzt, so daß eine kontinuierliche Dachfläche gebildet ist.

Wenn das Fahrzeugdach tailliert ist, wird ein Abstand zwischen den zueinander parallelen hinteren Längsführungen und dem jeweiligen Dachseitenholm zweckmäßigerweise von einer Blende abgedeckt. Damit kann der Dachseitenholm über seine Länge mit im wesentlichen unverändertem Querschnittsprofil gebildet sein.

Vorzugsweise enthält jeder Dachseitenholm einen innenseitig, d. h. zur Fahrzeuglängsebene hin angeordneten Lagerflansch, an dem die hintere Längsführung angeordnet ist. Zusätzlich kann der Lagerflansch weiter einwärts von der Längsführung eine Auflage zum Lagern der Heckscheibe aufweisen, so daß die Heckscheibe ohne Beeinträchtigung durch die Längsführungen montiert werden kann.

Nachfolgend wird ein Ausführungsbeispiel des Fahrzeugs unter Bezugnahme auf die Zeichnung näher erläutert. Es zeigt:
- Fig. 1: in einer Seitendraufsicht ein Fahrzeug mit einem erfindungsgemäßen Fahrzeugdach und einem eine Dachöffnung verschließenden Deckel;
- Fig. 2: in einer das Fahrzeug mit nach hinten über ein Heckscheibe verschobenem Deckel;
- Fig. 3: in einer Seitendraufsicht ein gattungsgemäßes Fahrzeug mit einem Fahrzeugdach gemäß dem Stand der Technik;
- Fig. 4: in einer Seitendraufsicht das Fahrzeug mit dem erfindungsgemäßen Fahrzeugdach entsprechend Fig. 1;
- Fig. 5: in einer Querschnittansicht gemäß Linie A - A in Fig. 4 das Fahrzeugdach mit geöffnetem Deckel;
- Fig. 6: in einer Querschnittansicht gemäß Linie B - B in Fig. 4 das Fahrzeugdach mit geöffnetem Deckel; und
- Fig. 7: in einer Ansicht in Explosionsdarstellung das erfindungsgemäße Fahrzeugdach mit einer den Deckel und Lagerschienen enthaltenden Deckelbaueinheit zur Anbringung am Fahrzeugdach.

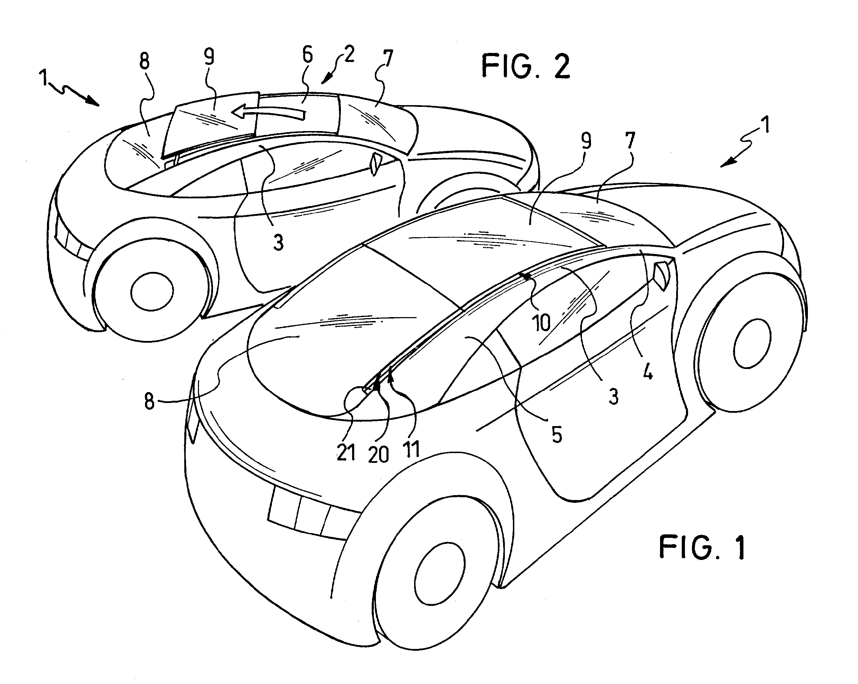

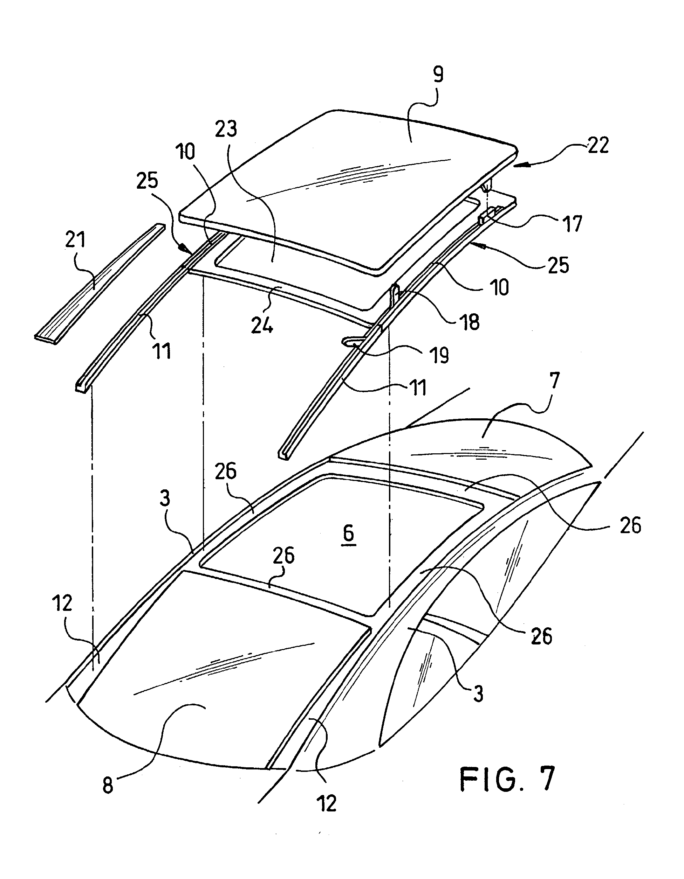

Ein Fahrzeug 1, wie z. B. ein Personenwagen in der Art einer Limousine, beispielsweise mit Fließheck, oder eines Coupés (siehe Fig. 1), weist ein Fahrzeugdach 2 mit zwei Dachseitenholmen 3 auf, die sich vorne an die A-Säulen 4 anschließen und hinten in die C-Säulen 5 übergehen oder deren Funktion übernehmen. Zwischen den beiden Dachseitenholmen 3 erstreckt sich eine Dachöffnung 6 (siehe Fig. 2), die vorne an eine Frontscheibe 7 und hinten an eine Heckscheibe 8 angrenzt, die an den Dachseitenholmen 3 fest angebracht ist. Die Dachöffnung 6 kann mittels eines bewegbaren Deckels 9, insbesondere einem transparenten Deckel oder einem Glasdeckel, wahlweise verschlossen (Fig. 1) oder zumindest teilweise freigelegt werden (Fig. 2). Der Deckel 9 ist an zwei vorderen Längsführungen oder Führungsschienen 10 (siehe Fig. 7) und an zwei hinteren Längsführungen oder Führungsschienen 11 verschiebbar gelagert. Die vorderen Führungsschienen 10 sind zueinander parallel in Dachlängsrichtung ausgerichtet und an einem innenseitigen Lagerflansch (nicht dargestellt) des jeweiligen Dachseitenholms 3 oder an einem daran befestigten Rahmen (z. B. am Rahmen 24 in Fig. 7) angebracht. Sie erstrecken sich am Dachseitenholm 3 im wesentlichen über die Länge der Dachöffnung 6.

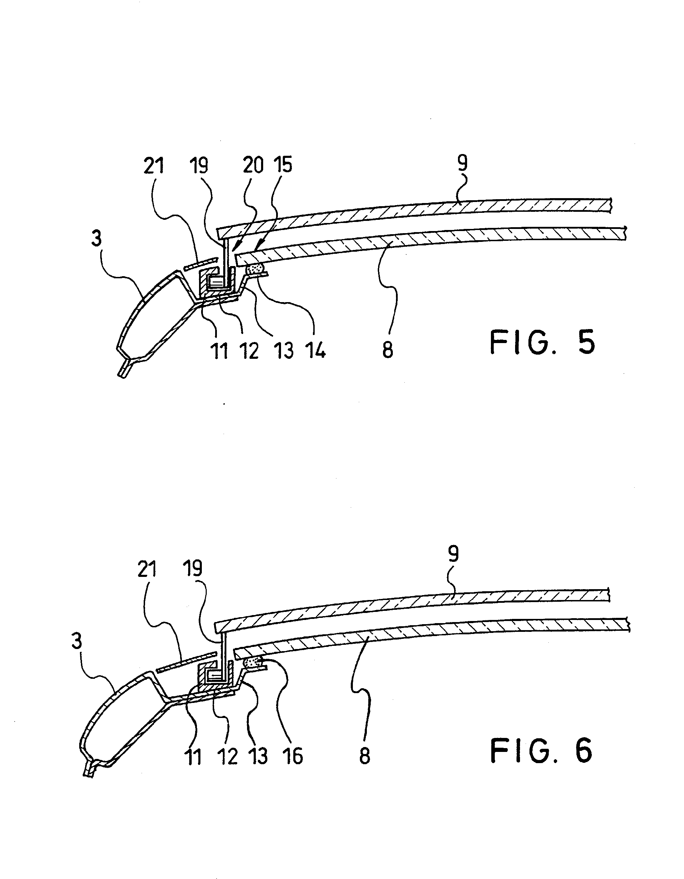

Die beiden zueinander parallelen hinteren Führungsschienen 11 schließen sich mit oder ohne Abstand an die vorderen Führungsschienen 10 an oder sind als einstückige Verlängerungen der vorderen Führungsschienen 10 gebildet. Auch die hinteren Führungsschienen 11 sind jeweils an einem innenseitigen Lagerflansch 12 des Dachseitenholms 3 angebracht (Fig. 5 und 6), der auch als Wasserrinne dient. Der Lagerflansch 12 weist einen nach oben gerichteten Innenabschnitt 13 mit einer Auflagefläche 14 für den Seitenrand 15 der Heckscheibe 8 auf, die an der Auflagefläche 14 mittels Klebstoff 16 befestigt ist.

Die Lagereinrichtung für den Deckel 9 enthält zwei an den vorderen Führungsschienen 10 verschiebbar gelagerte Schlitten 17 (siehe Fig. 7), die im Bereich des Vorderrandes des Deckels 9 mit diesem schwenkbar und insbesondere auch vertikal bewegbar verbunden sind, zwei an den vorderen Führungsschienen 10 ausschwenkbar gelagerte Ausstellhebel 18 zum Ausstellen des Hinterrandes des Deckels 9 und zwei an den hinteren Führungsschienen 11 verschiebbar und ausstellbar gelagerte Stützhebel 19, die am Hinterabschnitt des Deckels 9 angelenkt sind. Der Deckel 9 wird mittels einer Antriebseinrichtung (nicht dargestellt), die beispielsweise über Antriebskabel an den vorderen Schlitten 17 angreift, zwischen seiner Offenstellung und seiner Schließstellung verschoben. Um den Deckel 9 in seine Offenstellung nach hinten zu verschieben, verschwenken die Ausstellhebel 18 nach oben, wobei sie den Hinterrand des Deckels 9 über die unmittelbar dahinter liegende Heckscheibe 8 anheben. Beim Anheben des Deckels 9 wird jeder Stützhebel 19 aus seiner verdeckten Stellung nach oben ausgeschwenkt, so daß er sich durch einen Spalt 20 erstreckt, der über der hinteren Führungsschiene 11 zwischen der Heckscheibe 8 und einer Blende 21 verläuft. Die Blende 21 bildet einen zur Dachhaut bündigen Abschluß oder Übergang vom Dachseitenholm 3 zur Heckscheibe 8 hin oberhalb des auf tieferem Niveau liegenden Lagerflansches 12 und deckt die Führungsschiene 11 teilweise ab. Der Stützhebel 19 wird gemeinsam mit dem Deckel 9 in seiner nach oben ragenden Stellung durch den Spalt 20 nach hinten verschoben, wobei der angehobene Hinterrand des Deckels 9 über die dahinter liegende Heckscheibe 8 verschoben wird. Der Spalt 20 kann zusätzlich von einer bewegbaren Abdeckung wie z. B. von einem bewegbaren Dichtelement (nicht dargestellt) abgedeckt sein, wenn der Deckel 9 geschlossen ist, wobei der Stützhebel 19 die Dichtlippe elastisch verdrängt, während er mit dem Deckel 9 entlang des Spaltes 20 nach hinten verschoben wird.

Diese Art der Lagerung des Deckels 9 ist beispielsweise entsprechend der in der DE 197 13 347 C1 offenbarten Lagerung für einen oberhalb des festen Fahrzeugdaches über ein zusätzliches hinteres Dachteil nach hinten verschiebbaren Deckel gestaltet. Auf die Offenbarung der DE 197 13 347 C1 wird insbesondere hinsichtlich der Lagerung des Deckels (siehe Ausstellhebel 27 und Stützhebel 43 in der DE 197 13 347 C1) und der Führungsschienen ausdrücklich Bezug genommen.

Der an seinem Hinterrand ausgestellte bzw. angehobene Deckel 9 ist, während er über die dahinter liegende Heckscheibe 8 verschoben wird, mittels seiner vorderen Abstützung (Schlitten 17) an den vorderen Führungsschienen 10 und seiner hinteren Abstützung durch die Stützhebel 19 an den hinteren Führungsschienen 11 sehr stabil geführt.

Eine Deckelbaueinheit 22 (Fig. 7) enthält einen eine Rahmenöffnung 23 umgebenden Lagerrahmen 24, der in Einbaulage am Fahrzeugdach 2 die Dachöffnung 6 begrenzt. An den seitlichen Rahmenteilen 25 des Lagerrahmens 24 sind die vorderen Führungsschienen 10 angebracht. Die hinteren Führungsschienen 11 erstrecken sich von den seitlichen Rahmenteilen 25 nach hinten. Der Deckel 9 ist an dieser Deckelbaueinheit 22 montiert, die somit vorgefertigt an ihrer vorgesehenen Einbaustelle an einem dachfesten Rahmen 26 befestigt werden kann. Dabei werden die hinteren Führungsschienen 11 an den Lagerflanschen 12 vor der Montage oder nach der Montage der Heckscheibe 8 an den Auflageflächen 14 der Lagerflansche 12 befestigt. Durch diese Gestaltung bestehen größere Freiheiten bei der Montage des Daches.

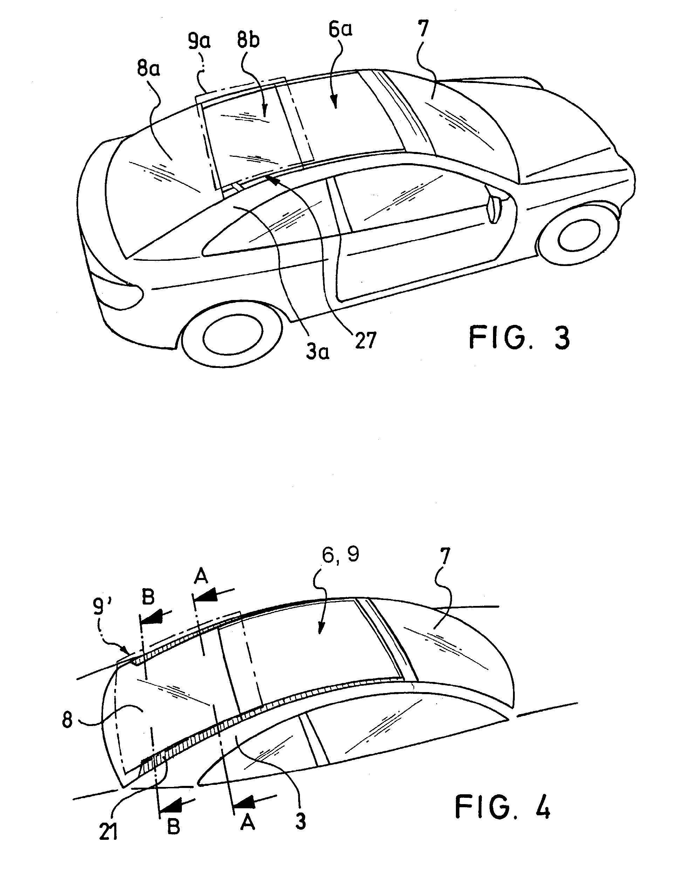

Da die hinteren Führungsschienen 11 am Seitenrand der Heckscheibe 8 in Längsrichtung entlang eines Teils der Heckscheibe oder über die gesamte Länge der Heckscheibe 8 verlaufen, kann der Deckel 9 entsprechend weit nach hinten über die Heckscheibe 8 verfahren werden (siehe Fig. 4, Deckel 9' strichpunktiert dargestellt). Somit kann bei dem erfindungsgemäßen Fahrzeugdach mit einer langen Dachöffnung 6 und einer daran anschließenden Heckscheibe 8 der entsprechend lange Deckel 9 vollständig über die Heckscheibe 8 verfahren werden, so daß, insbesondere bei gleicher Länge der Dachöffnung 6 bzw. des Deckels 9, die große Dachöffnung vollständig freigelegt werden kann.

Bei dem bekannten aktuellen Mercedes-Benz Sportcoupé der C-Klasse hingegen (siehe beispielhafte Darstellung gemäß Fig. 3) ist zwischen der Dachöffnung 6a und der Heckscheibe 8a, die an den Dachseitenholmen 3a fugenlos montiert ist, ein zusätzliches Dachteil 8b an den Dachseitenholmen fest angebracht, wobei in seitlichen Vertiefungen 27 zwischen dem Dachteil 8b und dem Dachseitenholm 3a der Deckel 9a mittels seiner Lagereinrichtung geführt ist. Diese Dachgestaltung, bei der die hinteren Führungsschienen des Deckels 9a am Vorderrand der Heckscheibe 8a enden, erfordert eine größere Anzahl von Dachbauteilen und gestattet nur eine kleinere Dachöffnung 6a.

Wenn die hinteren Führungsschienen 11 nicht bis an das Hinterende der Heckscheibe 8 verlaufen (siehe Fig. 1), ist beispielsweise die Heckscheibe 8 in Längsrichtung hinter dem Spalt 20 breiter gebildet und reicht bis unmittelbar an den Dachseitenholm 3, so daß in diesem Bereich keine Blende erforderlich ist.

Bei einem taillierten Fahrzeugdach, das bezüglich der Dachlängsrichtung in der Dachmitte schmaler ist wie in seinem Vorderabschnitt bzw. Hinterabschnitt, verlaufen die Dachseitenholme in Oberansicht gekrümmt und vom Mittelbereich zum Hinterabschnitt nach außen (siehe die Lage der Schnittansichten A-A und B-B in Fig. 4). Demzufolge verbreitert sich der Aufnahmeraum für die hintere Führungsschiene 11 am Lagerflansch 12, der durch die sich in ihrer Breite ändernde Blende 21 abgedeckt wird.

Grundsätzlich kann für das Fahrzeugdach statt eines Glasdeckels 9 auch ein Deckel aus transparentem Kunststoff oder ein Deckel aus transparenten und nicht transparenten Bereichen verwendet werden.

### Bezugszeichenliste

- 1: Fahrzeug
- 2: Fahrzeugdach
- 3: Dachseitenholm
- 4: A-Säule
- 5: C-Säule
- 6: Dachöffnung
- 7: Frontscheibe
- 8: Heckscheibe
- 8b: zusätzliches Dachteil
- 9: Deckel
- 10: vordere Führungsschiene
- 11: hintere Führungsschiene
- 12: Lagerflansch
- 13: Innenabschnitt
- 14: Auflagefläche
- 15: Seitenrand
- 16: Klebstoff
- 17: Schlitten
- 18: Ausstellhebel
- 19: Stützhebel
- 20: Spalt
- 21: Blende
- 22: Deckelbaueinheit
- 23: Rahmenöffnung
- 24: Lagerrahmen
- 25: seitliches Rahmenteil
- 26: dachfester Rahmen
- 27: Vertiefung

## Patentansprüche

1. Fahrzeug, insbesondere Limousine oder Coupé, mit einem Fahrzeugdach (2) mit karosseriefesten Dachseitenholmen (3), mit einem sich an eine Frontscheibe (7) anschließenden bewegbaren Deckel (9) zum Schließen und zum Freilegen einer im Fahrzeugdach (2) gebildeten Dachöffnung (6) und mit einer an die Dachöffnung (6) angrenzenden Heckscheibe (8), wobei der Deckel (9) mittels einer vorderen Lagereinrichtung (17) und einer hinteren Lagereinrichtung (19) an vorderen bzw. hinteren dachfesten Längsführungen (10 bzw. 11) verschiebbar geführt ist und zum Freilegen der Dachöffnung (6) zumindest an seiner Hinterkante angehoben und über die Heckscheibe (8) verschoben wird, und
wobei die vorderen und die hinteren dachfesten Längsführungen (10 bzw. 11) im Bereich der beiden Dachseitenholme (3) bezüglich der Dachoberfläche versenkt angeordnet sind und die hinteren Längsführungen (11) entlang der Seitenränder der Heckscheibe (9) verlaufen.

2. Fahrzeug nach Anspruch 1,
**dadurch gekennzeichnet, daß** die hinteren Längsführungen (10) vor dem Hinterende der Heckscheibe (8) enden und die Heckscheibe (8) seitlich an die hinteren Längsführungen (11) und an die hinter den Längsführungen (11) liegenden Abschnitte der Dachseitenholme (3) angrenzt.

3. Fahrzeug nach Anspruch 1 oder 2,
**dadurch gekennzeichnet, daß** das Fahrzeugdach (2) tailliert ist und ein Abstand zwischen den zueinander parallelen hinteren Längsführungen (11) und dem jeweiligen Dachseitenholm (3) von einer Blende (21) abgedeckt ist.

4. Fahrzeug nach einem der Ansprüche 1 bis 3,
**dadurch gekennzeichnet, daß** jeder Dachseitenholm (3) einen innenseitigen Lagerflansch (12) aufweist, an dem die hintere Längsführung (11) angeordnet ist und daß der Lagerflansch (12) einwärts von der Längsführung (11) eine Auflage (14) zum Lagern der Heckscheibe (8) aufweist.

5. Fahrzeug nach einem der Ansprüche 1 bis 4,
**dadurch gekennzeichnet, daß** die hintere Lagereinrichtung jeweils einen Ausstellhebel (18) zum Ausstellen des Hinterendes des Deckels (9) und einen ausschwenkbaren Stützhebel (19) zum Abstützen des Deckels (9) beim Verschieben in eine hintere Öffnungsstellung aufweist.

6. Fahrzeug nach einem der Ansprüche 1 bis 5,
**dadurch gekennzeichnet, daß** eine Deckelbaueinheit (22) einen Lagerrahmen (24) zum Anbringen an des Fahrzeugdach aufweist und daß an dem Lagerahmen (24) die vorderen Längsführungen (10) und die hinteren Längsführungen (11) angeordnet sind.

7. Fahrzeug nach einem der Ansprüche 1 bis 6,
**dadurch gekennzeichnet, daß** sich der Deckel (9) beidseits bis an den Dachseitenrand bzw. die Dachseitenholme (3) erstreckt.
